# FASCICULE DE BREVET EUROPEEN

(11) **EP 0 364 365 B1**
(45) Date de publication et mention de la délivrance du brevet: **10.03.1993**
(21) Numéro de dépôt: 89402837.2
(22) Date de dépôt: 13.10.1989
(51) Int. Cl.: A01F 12/44

(54) **Dispositif de séparation primaire du grain pour une moissonneuse-batteuse de céréales**
Korn-Trennungsvorrichtung für Mähdrescher
Primary grain separating device for a cereal combine harvester

(30) Priorité: 14.10.1988 FR 8813588
(43) Date de publication de la demande: 18.04.1990
(73) Titulaire: Zachary, Alain, F-08400 Vouziers (FR)
(72) Inventeur: Zachary, Alain, F-08400 Vouziers (FR)
(74) Mandataire: Clanet, Denis

(56) Documents cités:
- EP-A- 0 244 852
- FR-A- 1 006 384
- FR-A- 2 030 564
- FR-A- 2 382 847
- GB-A- 2 056 241
- US-A- 1 907 344
- US-A- 2 927 694
- US-A- 3 406 505

## Description

La présente invention concerne une moissonneuse-batteuse pour céréales et vise en particulier un dispositif de séparation primaire du grain et de la paille, des tiges ou autres déchets, après leur passage dans le dispositif de battage.

Dans la plupart des machines commercialisées actuellement, la séparation du grain et de la paille s'effectue, en aval du dispositif de battage, au moyen de secoueurs oscillants perforés sur lesquels le mélange paille et grains battus progresse de l'avant vers l'arrière dans le sens longitudinal de la machine, les grains tombant progressivement à travers la paille jusqu'aux plaques perforées au fond des secoueurs, qu'ils traversent pour être recueillis dans des dispositifs de séparation finale, par exemple avec séparation aéraulique de la balle, des menues pailles et autrepoussières.

Pour des raisons économiques, ces machines sont actuellement de tailles de plus en plus grandes et de puissances de plus en plus élevées, afin de traiter des grands volumes de céréales dans un temps aussi réduit que possible.

Cependant, lorsque la machine roule sur des terrains en dévers, l'efficacité des secoueurs diminue.

On observe également que le lit de paille progressant sur les secoueurs atteint parfois plusieurs dizaines de centimètres, de sorte que la chute du grain à travers un lit d'une telle épaisseur s'effectue relativement lentement et l'on a été amené à allonger notablement les secoueurs.

D'autres solutions, également à partir de tables vibrantes, ont été développées, généralement en multipliant les étages de battage, mais en augmentant par là même la complexité et le coût de la machine, ainsi que la puissance consommée, sans compter les risques de blocage complet de la machine lorsque la paille "bourre" dans les étages de battage, ce qui se produit parfois dans certaines conditions de récolte.

Une autre solution, illustrée dans les brevets FR 2 030 564 (celui-ci présentant toutes les caractéristiques du préambule de la revendication 1), FR 2 382 847, US 1 907 344 et FR 1 006 384 consiste à faire circuler le mélange paille-grain après battage dans un tambour à paroi perforée en rotation s'étendant suivant l'axe longitudinal de la machine.

L'intérêt de cette solution est de rendre cet étage de séparation insensible aux inclinaisons transversales de la machine circulant sur des terrains en dévers.

Dans le document FR 1 006 384, la progression des matières récoltées s'effectue par gravité, grâce à une inclinaison appropriée de l'axe du tambour.

Dans le document FR 2 030 564, l'entraînement du mélange paille-grain est assuré grâce à une nervure en hélice disposée à la périphérie interne du tambour. Il s'agit, cependant, d'un entraînement relativement lent et ce type de solution n'a connu aucun développement pratique puisqu'il faudrait réaliser des tambours de dimensions excessives et/ou adjoindre des moyens d'entraînement complémentaires, tels qu'un entraînement aéraulique comme le prévoit ce document.

Dans le document FR 2 382 847, en plus d'une nervure hélicoïdale à la périphérie interne du tambour, il est prévu dans l'axe du tambour un équipage à bras mobiles en va-et-vient destinés à entraîner longitudinalement la matière. Il s'agit cependant d'un arrangement complexe, coûteux et fragile.

Dans le document US 1 907 344, la face intérieure du tambour porte un grand nombre de barres inclinées vers l'intérieur et vers l'arrière du tambour. En raison de leur nombre élevé, l'ensemble des barres constitue en fait une surface généralement cylindrique présentant un léger relief hélicoïdal de pas très faible.

L'entraînement du mélange de matières récoltées est peu efficace et il est donc nécessaire d'adjoindre un moyen aéraulique complémentaire pour entraîner correctement les matières. De plus, les grains et autres déchets de petite taille subissent un entraînement longitudinal pratiquement nul.

L'invention a pour pour objet un dispositif de séparation simple et efficace qui remédie aux inconvénients de ces divers appareils.

Pour pallier ces inconvénients, l'invention concerne un dispositif de séparation primaire du grain et de la paille pour une moissonneuse-batteuse de céréales comportant un châssis et des roues et, d'avant en arrière dans le sens longitudinal de déplacement de la moissonneuse-batteuse :
- un dispositif de moissonnage
- un convoyeur de matières moissonnées
- un batteur
- un séparateur à tambour rotatif

le séparateur comprenant :
un tambour cylindrique rotatif disposé sensiblement horizontalement dans la direction longitudinale de la moissonneuse-batteuse et présentant un orifice d'entrée en regard dudit batteur et un orifice de sortie à l'arrière de la moissonneuse-batteuse,
le tambour comportant une paroi cylindrique percée de multiples perforations permettant le passage du grain, au moins une nervure interne fixée à la paroi cylindrique et formant une hélice d'un premier pas (p) prédéterminé sur toute la longueur du tambour caractérisé en ce qu'il comprend en outre une pluralité d'organes d'entraînement, de forme allongée, fixés audit tambour et s'étendant vers l'intérieur de celui-ci et disposés, tant longitudinalement que circonférentiellement par rapport au tambour, de manière à former ensemble des portions successives d'une surface sensiblement hélicoïdale d'un second pas (P) nettement supérieur au premier pas (p).

Grâce à cette disposition, lors de la rotation du tambour, le mélange grain-paille progresse depuis l'extrémité avant vers l'extrémité arrière du tambour selon deux modalités différentes : le grain, les poussières et les petits fragments de paille progressent essentiellement le long de la nervure de la paroi du tambour, et les grains, éventuellement accompagnés de poussières et de menue paille traversent les perforations de la paroi du tambour pour être recueillis dans une auge de réception située sous le tambour, tandis que les tiges de paille sont entraînées essentiellement le long des organes d'entraînement, dont il résulte que les tiges de paille sont relativement empêchées d'atteindre la paroi intérieure du tambour et qu'elles sont entraînées dans le sens longitudinal du tambour à une vitesse nettement supérieure à celle du grain.

Avantageusement, les organes d'entraînement sont formés par des barres présentant à une extrémité des moyens de fixation à la paroi intérieure du tambour, par exemple sur la nervure périphérique, le profil des barres présentant successivement depuis cette extrémité une courte section radiale en direction de l'axe du tambour, une section incurvée dans un plan sensiblement radial du tambour, puis une section incurvée suivant un plan incliné par rapport à l'axe du tambour, se terminant par une extrémité libre située à distance de l'axe du tambour.

Les détails et avantages de l'invention seront maintenant décrits en se référant aux dessins annexés, dans lesquels :
- la figure 1 est une vue en perspective schématique d'un séparateur primaire de grain selon l'invention, pour une moissonneuse-batteuse dont les éléments principaux sont simplement esquissés ;
- la figure 2 est une vue en coupe longitudinale du tambour de séparateur ;
- la figure 3 est une vue en bout du tambour de la figure 2 ; et
- la figure 4 est une vue de type photographique du tambour prise depuis son orifice d'entrée.

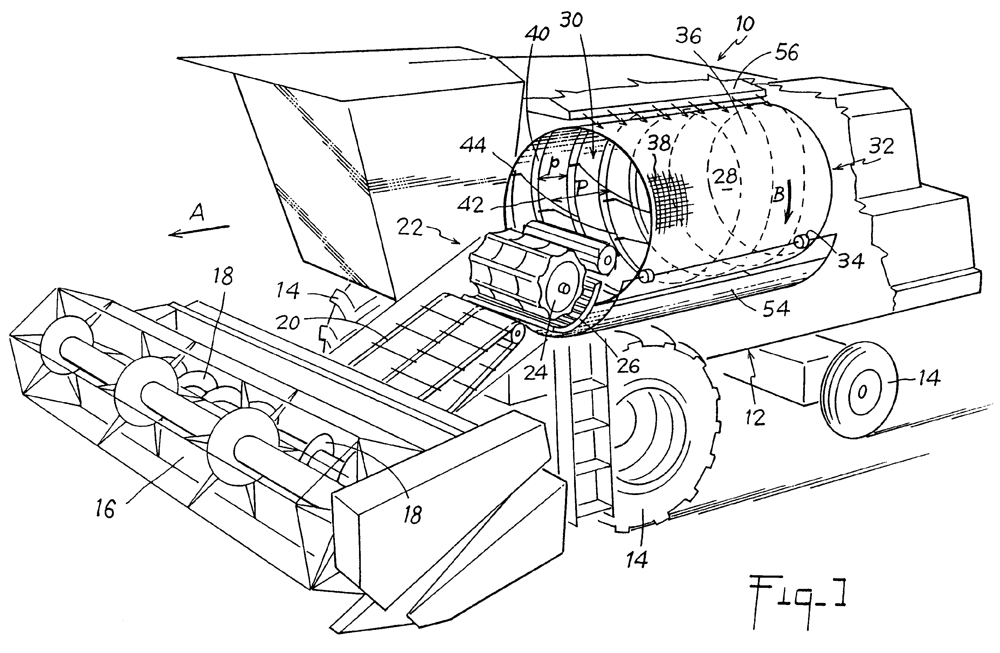

La moissonneuse-batteuse illustrée à la figure 1 et désignée dans son ensemble par la référence 10 comprend un châssis 12 et des roues 14 pour son déplacement au sol.

Depuis son extrémité avant, jusqu'à son extrémité arrière en considérant son sens de déplacement en fonctionnement normal, flèche A, elle comporte successivement :
- une unité de moissonnage 16 destinée à faucher les tiges de céréales sur une grande largeur et à les rassembler en un lit de largeur réduite, par exemple au moyen de vis d'Archimède opposées 18 comme bien connu,
- un convoyeur de transfert 20 qui élève le lit de céréales provenant de l'unité de moissonnage jusqu'à une hauteur nécessaire pour les autres unités de la machine,
- un étage de battage 22 comprenant un rotor 24 de battage entraîné en rotation rapide par un moteur et une transmission non représentés, et un contre-batteur fixe 26, l'ensemble étant de tout type classique connu.

Les matières récoltées pénètrent entre le rotor et le contre-batteur où elles subissent un battage énergique destiné essentiellement à séparer les grains des tiges.

Les conditions de fonctionnement dans ce type de batteur sont bien connues et on ne mentionnera ici que quelques aspects :
- le battage doit être optimal, c'est-à-dire ni trop violent afin que les tiges de céréales ne soient pas déchiquetées et donc inutilisables, ni trop faible afin que les grains soient effectivement séparés des tiges,
- les pièces en présence doivent être robustes pour encaisser les efforts importants auxquelles elles sont soumises, notamment en cas de "bourrage" ou blocage lorsque l'alimentation en matières récoltées devient excessive,
- le battage doit être homogène, tant sur la totalité de la largeur du lit de matières récoltées que sur la totalité de son épaisseur,
- dans la plupart des machines, le batteur est l'organe qui exige le plus de puissance motrice et, par conséquent, entraîne la plus forte consommation en carburant.

Conformément à l'invention, la moissonneuse-batteuse comporte ensuite un tambour 28 de séparation primaire disposé longitudinalement et sensiblement horizontalement.

Il présente un orifice d'entrée 30 en regard de la sortie de l'étage de battage et un orifice de sortie 32 à l'arrière de la moissonneuse-batteuse.

Le tambour 28 est soutenu par des galets 34 et entraîné en rotation, dans le sens de la flèche B, par des moyens non représentés. Il comporte une paroi cylindrique périphérique 36 percée de multiples perforations 38, sensiblement sur toute sa surface ; ces perforations ont, de préférence, un calibre correspondant aux grains de céréales les plus gros dans la région où la moissonneuse-batteuse est utilisée. Il s'agira, en général, des grains de maïs, ou encore des pois secs, féveroles, etc.

On choisira, de préférence, des perforations de taille suffisante pour le passage des otons, c'est-à-dire des fragments d'épis de céréales auxquels restent encore attachés quelques grains.

A l'intérieur du tambour, on trouve d'une part une nervure 40 fixée à la paroi interne de la paroi cylindrique 36, et lui conférant une rigidité suffisante, s'enroulant en hélice de pas p sur toute la longueur du tambour.

On trouve d'autre part une pluralité d'organes d'entraînement de forme allongée 42, constitués dans ce mode de réalisation par des barres métalliques.

Ces barres métalliques ont, à une extrémité, des moyens de fixation 44 destinés à leur fixation sur le tambour, soit directement sur la paroi du tambour, soit sur la nervure hélicoïdale.

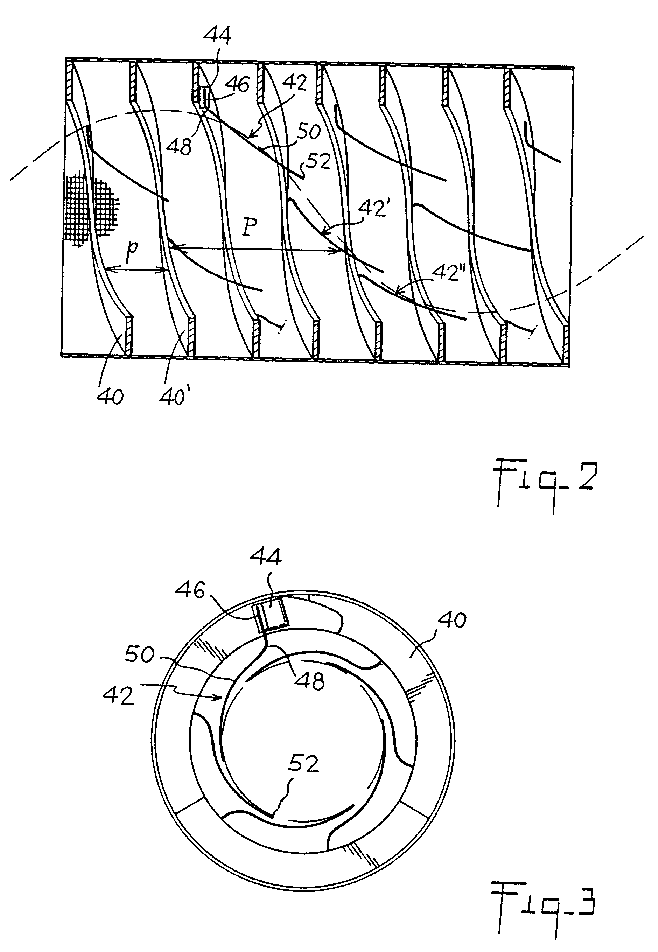

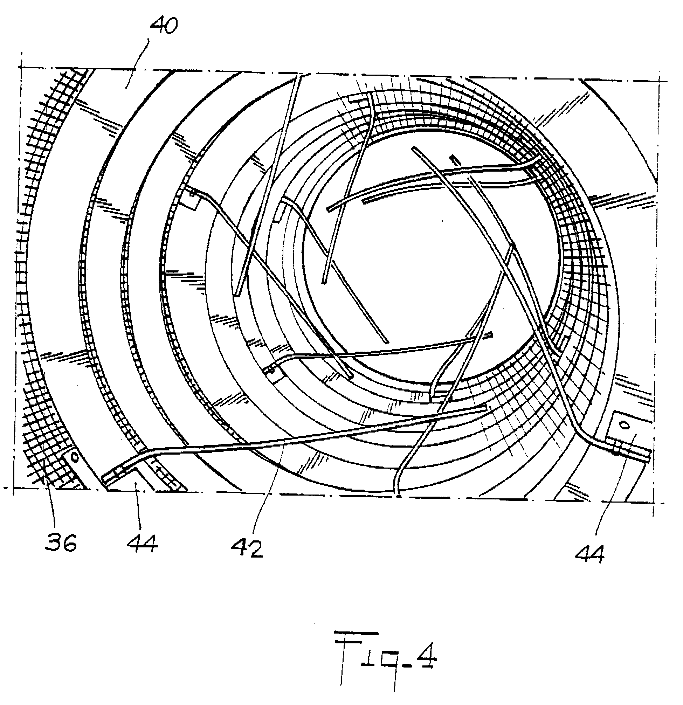

A partir de cette extrémité, le profil des barres 42 comprend successivement, comme on le verra aux figures 2 et 3 :
- un court tronçon radial 46 dirigé sensiblement vers l'axe du tambour,
- un tronçon recourbé 48 dans un plan sensiblement radial,
- puis un tronçon recourbé 50 dans un plan incliné par rapport à l'axe du tambour,

de telle sorte que l'extrémité distale 52 de la barre soit située à une certaine distance de l'axe du tambour.

Les barres métalliques sont disposées successivement, tant longitudinalement que circonférentiellement par rapport au tambour, de manière à former ensemble des portions successives d'une surface sensiblement hélicoïdale de pas P, choisi nettement supérieur à p.

A cet effet, lorsqu'une première barre 42, voir figure 2, est fixée, on fixe une seconde barre 42′ au voisinage de l'aplomb de l'extrémité distale 52 de la première barre. On procède de même avec une troisième barre 42˝, puis une quatrième, etc.

En fait, comme l'illustre la figure 2, on disposera, de préférence, la nervure 40 et les barres 42 non pas de manière à former des hélices uniques de pas p et P, mais plusieurs hélices imbriquées.

La coupe de la figure 2 montre en effet deux nervures 40 et 40′, décalées de 180° sur la circonférence du tambour et séparées d'une distance longitudinale p, mais présentant en fait chacune un pas égal à 2p. De même, les barres 42 sont disposées suivant trois hélices imbriquées, décalées de 120° sur la circonférence du tambour et séparées d'une distance longitudinale P, mais présentant en fait chacune un pas égal à 3P. Dans le cas présent, ce pas 3P a été choisi égal à la longueur du tambour.

Il conviendra de comprendre dans le contexte de l'invention que le mot "pas" désigne un pas "équivalent", lorsqu'on a affaire à plusieurs hélices imbriquées, égal au pas de l'une des hélices, divisé par le nombre d'hélices.

Le tambour de séparation fonctionne de la manière suivante :
les matières battues, c'est-à-dire le mélange grain-paille sortant de l'étage de battage 22, pénètrent dans le tambour 28 par son orifice d'entrée 30. La rotation du tambour provoque un brassage du mélange, permettant aux grains de migrer par gravité à travers la paille jusqu'à venir en contact avec la paroi cylindrique 36 et sortir du tambour par les perforations 38, étant fait observer que la vitesse du tambour est suffisamment faible pour exclure tous phénomènes de centrifugation.

Ainsi, les matières qui sont entraînées vers le haut le long du côté "montant" du tambour retombent, passé une certaine altitude, en direction de la face opposée descendante du tambour, et donc sur une surface de grille découverte.

Lors de ces mouvements, on constate que les matières de petite taille : grains, poussières, fragments de tiges se rassemblent dans les intervalles séparant les nervures périphériques 40 et progressent ainsi en direction de l'orifice de sortie 32 à une vitesse proportionnelle à n x p où n est la vitesse de rotation du tambour et p le "pas" des nervures 40. Ce pas p sera bien entendu choisi nettement inférieur à la longueur typique des tiges de paille.

Par contre, les tiges de paille sont guidées au cours de leur chute le long des barres 42, ceci se comprenant naturellement puisque les tiges ont une certaine longueur qui les amène, à des facteurs statistiques près, à rentrer en contact avec les barres, sans atteindre la périphérie du tambour.

Ainsi, en première approximation, les tiges de paille sont entraînées en direction de l'orifice de sortie à une vitesse proportionnelle à n x P, donc nettement supérieure à la vitesse de progression des autres matières de petite taille, puisque ces dernières ne sont pas suceptibles, également à des facteurs statistiques près, de rentrer en contact avec les barres.

De plus, les tiges de paille sont pratiquement empêchées de venir au contact de la paroi 36 du tambour grâce aux barres 42 qui les retiennent à distance. Ainsi, ces tiges ne risquent pas de se mélanger aux matières de petite taille qui progressent le long des canaux séparant les nervures 40, ni d'obstruer les perforations 38 du tambour.

Par contre, certaines tiges de pailles peuvent se projeter au delà des barres jusqu'au niveau de la nervure. Il s'ensuit un effet de blocage ou coincement sur le côté ascendant du cylindre, dans des secteurs d'angle aigu définis entre la nervure hélicoïdale et les barres disposées en hélice. Grâce à cet effet de blocage, les matières battues sont obligées de s'élever jusqu'à une hauteur relativement importante dans le tambour avant de retomber en direction du côté opposé descendant du tambour.

Tombant d'une hauteur importante, les matières sont efficacement disloquées, ce qui permet une migration plus rapide et plus complète des grains jusqu'à la partie inférieure du tambour.

En outre, au cours de leur chute, les tiges de paille subissent, par coopération avec les barres 42, un entraînement longitudinal réellement efficace, à une vitesse proportionnelle au pas P de ces dernières, et sans accroissement de la dépense énergétique.

De plus, ces tiges de paille traversent le tambour sans subir de contraintes physiques notables et sont évacuées à l'arrière de la moissonneuse-batteuse pratiquement dans l'état dans lequel elles sortent de l'étage de battage, donc réutilisables éventuellement pour la litière ou la nourriture du bétail.

Pendant leur progression dans le tambour, les pailles ont globalement une faible densité, grâce à leur brassage permanent, et le risque de bourrage du tambour en cas de suralimentation est pratiquement nul. De plus, la structure libère de larges voies de dégagement pour la paille, tant entre les tiges elles-mêmes qu'entre les tiges et le tambour.

Les grains, accompagnés de poussières, de balle et de quelques menues pailles, se rassemblent dans une auge de récéption 54 s'étendant sous le tambour.

La moissonneuse-batteuse comprendra naturellement tous organes appropriés pour puiser le grain dans l'auge et effectuer une séparation des autres matières recueillies dans l'auge, par exemple par des procédés aérauliques au gré de l'homme de métier.

En complément, on prévoira au voisinage du sommet du tambour une lèvre 56 de soufflage d'air dirigée sensiblement radialement vers la surface extérieure du tambour, afin de désobstruer les perforations 38 en cas de colmatage de ces dernières.

Un tambour prototype de 2 m diamètre et 3 m de longueur, réalisé à partir de 9 tôles perforées de 2 m x 1 m et cintrées, doté de nervures de 15 cm de hauteur espacées de 25 cm et de barres de longueur développée de 1 m 40 conformées et disposées comme illustré à la vue photographique de la figure 4, entraîné à une vitesse de rotation de 18 tr/min, a permis de vérifier les conditions de fonctionnement énoncées ci-avant.

Dans toute la description qui précède, on a décrit les organes 42 sous forme de barres, mais il va de soi que l'invention englobe de multiples variantes, par exemple des aubes, des pales, des bandes.

Enfin, en plus de la réduction de consommation de puissance, le dispositif est extrêmement simple et fiable.

La vitesse de rotation du tambour est lente et uniforme et il y a peu de pièces en mouvement rapide ou alternatif.

Enfin, bien que la description et les dessins se réfèrent à une machine comportant un batteur transversal, on comprendra que l'invention s'applique virtuellement à toutes machines, y compris celles qui comportent des batteurs de type axial, ou encore les machines dites à "double flux" et encore à "flux naturel".

## Revendications

1. Dispositif de séparation primaire du grain et de la paille pour une moissonneuse-batteuse de céréales comportant un châssis (12) et des roues (14) et, d'avant en arrière dans le sens longitudinal de déplacement de la moissonneuse-batteuse :
- un dispositif de moissonnage (16)
- un convoyeur de matières moissonnées (20)
- un batteur (22)
- un séparateur à tambour rotatif (28)
le séparateur comprenant :
un tambour cylindrique (28) rotatif agencé pour pouvoir être disposé sensiblement horizontalement dans la direction longitudinale de la moissonneuse-batteuse et présentant un orifice d'entrée (30) destiné à être placé en regard dudit batteur (22) et un orifice de sortie (32) destiné à être placé à l'arrière de la moissonneuse-batteuse,
le tambour comportant une paroi cylindrique (36) percée de multiples perforations (38) permettant le passage du grain, au moins une nervure (40) interne fixée à la paroi cylindrique (36) et formant une hélice d'un premier pas (p) prédéterminé sur toute la longueur du tambour et comprenant en outre une pluralité d'organes d'entraînement (42), de forme allongée, s'étendant vers l'intérieur du tambour et disposés longitudinalement par rapport à celui-ci, caractérisé en ce que les organes d'entraînement (42) s'étendent également circonférentiellement par rapport au tambour et sont fixé à celui-ci de manière à former ensemble des portions successives d'une surface sensiblement hélicoïdale d'un second pas (P) nettement supérieur au premier pas (p).

2. Dispositif selon la revendication 1, caractérisé en ce qu'il comprend plusieurs nervures internes (40, 40′) formant des hélices imbriquées.

3. Dispositif selon la revendication 1, caractérisé en ce que les organes d'entraînement (42) sont disposés de manière à former plusieurs surfaces hélicoïdales imbriquées.

4. Dispositif selon la revendication 1, caractérisé en ce que lesdits organes d'entraînement allongés s'étendent vers l'intérieur du tambour et vers l'arrière de celui-ci et présentent une extrémité distale (52) située à distance de l'axe du tambour.

5. Dispositif selon la revendication 1, caractérisé en ce que les organes d'entraînement (42) comportent à une extrémité des moyens de fixation (44) à ladite nervure (40).

6. Dispositif selon la revendication 1, caractérisé en ce que les organes d'entraînement (42) consistent en des barres présentant en profil, depuis leur extrémité (44) de fixation au tambour :
- une courte section radiale (46)
- une section courbée (48) dans un plan sensiblement radial
- une section courbée (50) sensiblement dans un plan incliné par rapport à l'axe du tambour.

## Patentansprüche

1. Vorrichtung zur Trennung der Körner von den Strohhalmen bei einem Mähdrescher, bestehend aus einem mit Rädern (14) versehenen Fahrgestell, auf welchem in Längsrichtung eine Einbringeinheit (16), ein der Förderung des Erntegutes dienender Förderer (20), eine Drescheinheit (22), sowie eine rotierende Trommel (28) angeordnet sind, wobei die zur Trennung dienende Trommel (28) im wesentlichen in Längsrichtung des Mähdreschers angeordnet ist und eine in Richtung der Drescheinheit (22) gerichtete Aufnahmeöffnung (30) und eine in Richtung des hinteren Endes des Mähdreschers gerichtete Abgabeöffnung (32) aufweist, wobei die Trommel eine zylindrische Wandung (36) aufweist, welche mit einer Vielzahl von zum Hindurchfallen der Körner dienenden Öffnungen (38) für das versehen ist, wobei an der Innenseite der zylindrischen Wandung (36) zusätzlich ein Steg (40) vorgesehen ist, welcher über die gesamte Länge der Trommel eine Schraube mit einer ersten vorgegebenen Steigung (p) bildet, und wobei zusätzlich eine Mehrzahl von länglichen Förderelementen (42) vorgesehen sind, welche in Längsrichtung der Trommel angeordnet sind und sich in das Innere derselben erstrecken dadurch **gekennzeichnet**, daß die Förderelemente (42) sich ebenfalls in Umfangsrichtung der Trommel erstrecken und an derselben derart befestigt sind, daß die Gesamtheit einzelner Abschnitte derselben im wesentlichen eine Schraubenfläche bildet, welche im Vergleich zur ersten Steigung (p) eine wesentlich größere zweite Steigung (P) aufweist.

2. Vorrichtung nach Anspruch 1 dadurch **gekennzeichnet**, daß dieselbe mehrere innenliegende Stege (40, 40′) aufweist, welche ineinander verschachtelte Schraubenflächen bilden.

3. Vorrichtung nach Anspruch 1 dadurch **gekennzeichnet**, daß die Förderelemente (42) derart angeordnet sind, daß mehrere ineinander verschachtelte Schraubenflächen gebildet werden.

4. Vorrichtung nach Anspruch 1 dadurch **gekennzeichnet**, daß die Förderelemente (42) in Bezug auf die Trommel sich nach innen und nach rückwärts erstrecken, wobei die distalen Enden (52) derselben in einem bestimmten Abstand zur Achse der Trommel zu liegen gelangen.

5. Vorrichtung nach Anspruch 1 dadurch **gekennzeichnet**, daß die Stege (40) mit Befestigungselementen (44) versehen sind, an welchen die Enden der Förderelemente (42) befestigt sind.

6. Vorrichtung nach Anspruch 1 dadurch **gekennzeichnet**, daß die Förderelemente (42) in Form von Stangen ausgebildet sind, welche von dem Befestigungspunkt (44) an der Trommel zuerst einen kurzen radialen Abschnitt (46), anschließend einen im wesentlichen in radialer Richtung gekrümmten Abschnitt (48) und schließlich einen im wesentlichen zur Achse der Trommel geneigten gekrümmten Abschnitt (50) aufweisen.

## Claims

1. Device for primary separation of grain from straw for a combine harvester-thresher for cereals comprising a chassis (12) and wheels (14), and from the front to the rear in the longitudinal direction of displacement of the combine harvester:
- a mower device (16);
- a mown crop conveyor (20);
- a thresher (22);
- a rotary drum separator (28);
said separator comprising:
a cylindrical rotary drum (28) disposed so as to be able to be placed substantially horizontally in the longitudinal direction of the combine harvester and having an inlet orifice (30) designed to be placed in facing relationship to said thresher (22) and an outlet orifice (32) designed to be placed at the rear of the combine,
the drum comprising a cylindrical wall (36) provided with a plurality of perforations (38) allowing the passage of grain therethrough, at least one internal rib (40) fixed to the cylindrical wall (36) and forming an helix at a first predetermined pitch (p) extending over the entire length of the drum, and further comprising a plurality of inwardly projecting elongate drive members (42) arranged longitudinally relative thereto, characterized in that the drive members (42) also extend circumferentially relative to the drum and are fixed thereto in such a manner as to form together successive portions of a substantially helical surface having a second pitch (P) which is considerably greater than the first pitch (p).

2. Device according to claim 1, characterized in that it comprises a plurality of ribs (40, 40′) constituting interleaved helixes.

3. Device according to claim 1, characterized in that the drive members (42) are disposed in such a manner as to form a plurality of interleaved helical surfaces.

4. Device according to claim 1, characterized in that said elongate drive members extend inwardly of the drum and rearwardly thereof and have a distal end (52) situated at a distance from the axis of the drum.

5. Device according to claim 1, characterized in that the drive members (42) comprise at one end fixing means (44) for fixing it to said rib (40).

6. Device according to claim 1, characterized in that the drive members (42) consist in rods, having in profile, from their end (44) where they are fixed to the drum:
a short radial segment (46);
a curved segment (48) lying in a substantially radial plane;
a curved segment (50) lying substantially in a plane which is inclined relative to the axis of the drum.
